(19) Europäisches Patentamt / European Patent Office / Office européen des brevets

(11) **EP 2 177 886 B1**

(12) **FASCICULE DE BREVET EUROPEEN**

(45) Date de publication et mention de la délivrance du brevet:
**31.07.2019 Bulletin 2019/31**

(51) Int Cl.:
*G01J 1/46* *(2006.01)*   *H04N 5/355* *(2011.01)*
*H04N 5/3745* *(2011.01)*

(21) Numéro de dépôt: **09305903.8**

(22) Date de dépôt: **28.09.2009**

(54) **Procédé et dispositif de lecture de charges électriques produites par un photodétecteur, et détecteur comportant de tels dispositifs**

Verfahren und Vorrichtung zum Ablesen der elektronischen Ladungen, die von einem Photodetektor erzeugt werden, und mit solchen Vorrichtungen ausgestatteter Detektor

Method and device for reading out electrical charges provided by a photodetector, and detector including such devices.

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **15.10.2008 FR 0856994**

(43) Date de publication de la demande:
**21.04.2010 Bulletin 2010/16**

(73) Titulaire: **Société Française de Détecteurs Infrarouges - SOFRADIR**
**92290 Châtenay Malabry (FR)**

(72) Inventeur: **Sanson, Eric**
**38000 Grenoble (FR)**

(74) Mandataire: **Cabinet Laurent & Charras**
**Le Contemporain**
**50 Chemin de la Bruyère**
**69574 Dardilly Cedex (FR)**

(56) Documents cités:
**GB-A- 2 365 650     US-A1- 2008 055 441**

• **Robert F. Cannata ET AL: "<title>Very wide dynamic range SWIR sensors for very low background applications</title>", Proceedings of SPIE, vol. 3698, 26 July 1999 (1999-07-26), pages 756-765, XP55247166, US ISSN: 0277-786X, DOI: 10.1117/12.354576 ISBN: 978-1-62841-730-2**

**Description**

**DOMAINE DE L'INVENTION**

L'invention a trait au domaine de la lecture de charges électriques créées dans des détecteurs élémentaires d'un détecteur matriciel, notamment des photodiodes.

**ETAT DE LA TECHNIQUE**

Il est connu d'utiliser des détecteurs élémentaires, notamment des photodiodes, pour détecter un rayonnement électromagnétique. Le rayonnement électromagnétique incident sur une photodiode crée en effet des charges électriques dans celle-ci. Ces charges sont usuellement collectées et accumulées dans une capacité d'intégration pour pouvoir être lues par la suite. Une amélioration de ce dispositif est de permettre le recouvrement temporel des phases d'intégration et de lecture. A cette fin, on utilise usuellement une capacité de lecture et un interrupteur de transfert.

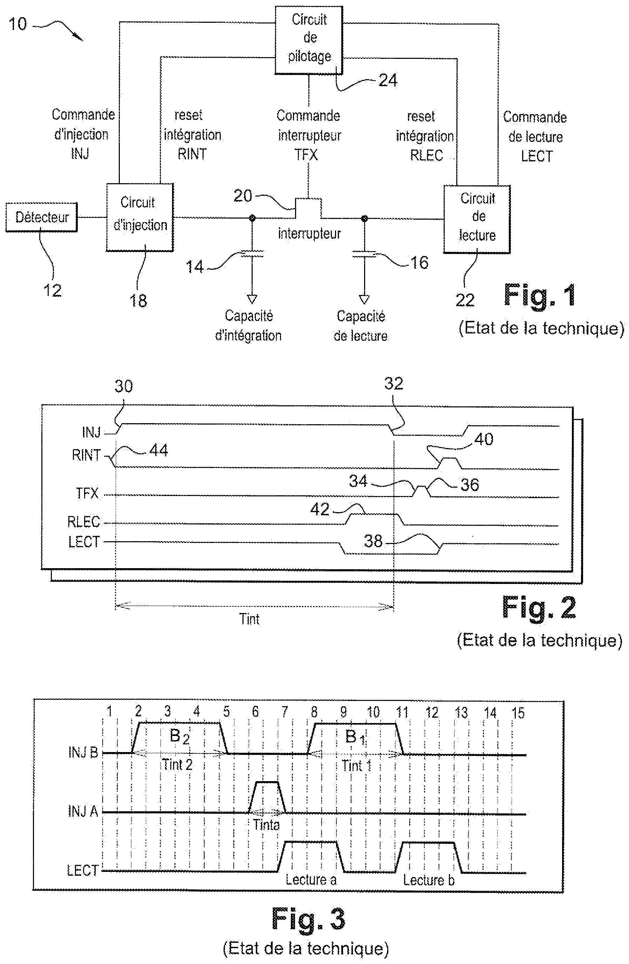

La figure 1 illustre de manière schématique, sous la référence générale **10,** un tel dispositif de lecture de l'état de la technique des charges électriques produites dans une photodiode **12** appartenant à une matrice de photodiodes d'un détecteur de rayonnement électromagnétique, tel qu'un rayonnement infrarouge, un rayonnement visible ou un rayonnement ultra-violet par exemple. Ce dispositif permet une intégration et une lecture simultanées des charges.

Un tel dispositif de lecture **10,** associé à chaque photodiode **12** du détecteur, comporte :

- un premier condensateur **14,** dit d'«intégration » ;
- un second condensateur **16,** dit de « lecture » ;
- un circuit d'injection **18** ayant pour fonction, lorsqu'il est activé, de polariser la photodiode **12** et de transférer les charges électriques produites par celle-ci au condensateur d'intégration **14.** Le circuit d'injection **18** a également pour fonction de décharger le condensateur d'intégration **14** ;
- un interrupteur **20** ayant pour fonction, lorsqu'il est dans son état fermé, de transférer les charges électriques stockées dans le condensateur d'intégration **14** vers le condensateur de lecture **16** ;
- un circuit de lecture **22** ayant pour fonction de lire la tension aux bornes du condensateur de lecture **16** et de transmettre par multiplexage la mesure de la tension à l'extérieur du dispositif de lecture **10,** par exemple sur un bus colonne du détecteur, la matrice de photodiodes étant lue par balayage, comme cela est connu en soi. Le circuit de lecture **22** a également pour fonction de décharger le condensateur de lecture **16** ; et
- un circuit de pilotage **24** commandant le circuit d'injection **18,** l'interrupteur **20** et le circuit de lecture **22.** Le circuit de pilotage **24** est usuellement également celui des autres circuits de lecture associés aux photodiodes du détecteur, de manière à synchroniser l'ensemble des signaux de commande, comme cela est connu en soi.

Plus particulièrement, le circuit de pilotage **24** commande :

- au moyen d'un signal « INJ », l'activation et la désactivation de la polarisation de la photodiode **12** et du transfert des charges produites par celle-ci, mis en oeuvre par le circuit d'injection **18** ;
- au moyen d'un signal binaire « RINT », la décharge du condensateur d'intégration **14,** mise en oeuvre par le circuit d'injection **18** ;
- au moyen d'un signal binaire « TFX », l'état de l'interrupteur **20** pour le transfert des charges du condensateur d'intégration **14** vers le condensateur de lecture **16** ;
- au moyen d'un signal binaire « RLECT », la décharge du condensateur de lecture **16,** mise en oeuvre par le circuit de lecture **22;** et
- au moyen d'un signal binaire « LECT », la lecture de la tension aux bornes du condensateur de lecture **16** et la transmission de la tension lue vers l'extérieur du dispositif **10,** mises en oeuvre par le circuit de lecture **22.**

Sur la figure 2, des chronogrammes de signaux de commande du circuit de pilotage **24** illustrent un procédé de lecture des charges électriques produites par la photodiode **12** mis en oeuvre par le dispositif de lecture **10** selon l'état de la technique.

En **30,** le signal « INJ » est basculé dans son état haut. Les charges produites dans la photodiode **12** sous l'effet d'un rayonnement incident sont alors stockées, via le circuit d'injection **18,** dans le condensateur d'intégration **14,** celui-ci étant préalablement remis à zéro par le signal « RINT ». Après une durée prédéterminée Tint, le signal « INJ » est basculé, en **32,** dans son état bas, le stockage des charges produites par la photodiode **12** dans le condensateur d'intégration **14** étant alors stoppé.

Une fois le stockage des charges dans le condensateur d'intégration 14 stoppé (« INJ » dans son état bas), le signal « TFX » est basculé, en **34,** dans son état haut pour transférer, via l'interrupteur **20,** les charges stockées dans le condensateur d'intégration **14** vers le condensateur de lecture **16,** celui-ci étant préalablement remis à zéro par le signal « RLEC ». Une fois ce transfert, quasi instantané, terminé, le signal « TFX » est basculé, en **36,** dans son état bas. Le signal de lecture « LECT » est alors basculé, en **38,** dans son état haut pour réaliser la lecture de la tension aux bornes du condensateur de lecture **16** et le transfert de la tension lue vers l'extérieur du dispositif **10.**

Les condensateurs d'intégration **14** et de lecture **16** sont alors déchargés par le basculement des signaux « RINT » et « RLEC » dans leur état haut respectivement en **40** après la fin de l'intégration et **42** après la fin de la lecture. Un nouveau cycle d'intégration et de lecture peut alors débuter après respectivement un nouveau basculement du signal « RINT » en **44** et du signal « RLEC » en **43**.

On notera que la lecture mise en oeuvre par le circuit de lecture **22** prend fin alors que le stockage des charges dans le condensateur d'intégration est effectif (signal « INJ » dans son état haut) et que le transfert des charges entre les condensateurs d'intégration et de lecture **14, 16** est inactif (signal « TFX » dans son état bas). En effet, comme cela est connu en soi, la tension lue par le circuit de lecture **22** est délivrée selon un mode multiplexé sur un bus colonne du détecteur, la matrice de photodiodes du détecteur étant lue ligne par ligne. De fait, la lecture et la délivrance d'une tension dans une matrice lue par balayage prend un certain temps. Pour ne pas suspendre pendant ce laps de temps le stockage des charges dans le condensateur d'intégration **14** en raison d'une lecture directe de la tension aux bornes de celui-ci, le condensateur de lecture **16** est prévu. Le transfert des charges produites par la photodiode **12** dans le condensateur de lecture **16** permet ainsi de lire la tension aux bornes de celui-ci, alors qu'un nouveau cycle d'accumulation des charges produites par la photodiode **12** dans le condensateur d'intégration **14** a débuté.

Une première limite dans le fonctionnement du dispositif de lecture ainsi décrit provient de la taille limitée de la capacité d'intégration **14**. En effet, la surface usuellement allouée au dispositif de lecture **10** est limitée pour des raisons de compacité. La charge électrique totale stockable dans le condensateur de lecture **14,** qui dépend de la taille de celui-ci, est donc limitée. La dynamique du détecteur est ainsi également limitée. A titre d'exemple de cette dynamique limitée, les condensateurs d'intégration associés à la matrice de photodiodes de celui-ci saturent rapidement sous l'effet d'un rayonnement intense.

Une seconde limite est liée au bruit de lecture. En effet, en deçà d'une certaine charge stockée dans le condensateur de lecture **16,** charge qui dépend de la valeur de la capacité de celui-ci, la lecture de la tension aux bornes du condensateur de lecture **16** est entachée d'un bruit important par rapport à la tension lue.

Le dispositif de lecture, dans son fonctionnement classique, voit donc sa dynamique limitée, à la fois dans les hautes charges (charge totale stockable limitée) et dans les basses charges (lecture des basses charges bruitée).

Pour pallier ces inconvénients, il a été proposé dans le document « Performance of BF focal plane array 320x256 InSb detector » d'O. Nesher, Semi Conductor Devices, proc. of SPIE, vol. 4820, page 699, une double intégration des charges produites par la photodiode **12**.

Selon cette technique, illustrée à la figure 3, deux intégrations de durées différentes sont réalisées concomitamment, une phase d'injection « A » présentant une durée d'intégration Tinta plus courte que la durée d'intégration Tint précède une phase d'injection « B1 » avec la durée d'intégration Tint1. Une phase d'injection « B2 », de durée d'injection Tint2, peut précéder la phase d'injection « A » pour améliorer la cohérence temporelle, la valeur « B » lue correspondant alors à la somme des charges accumulées durant Tint1 et Tint2.

Une augmentation de la dynamique est ainsi obtenue, puisque la charge totale « stockable » est multipliée virtuellement par le coefficient $\dfrac{Tint1 + Tint2}{Tinta}$.

En outre, deux mesures de tension sont obtenues, la première correspondant à une courte durée d'intégration des charges dans le condensateur d'intégration **14,** et la seconde correspondant à une longue durée d'intégration dans le condensateur **14**. La première mesure comporte ainsi des informations sur la partie la plus haute de la dynamique du signal et la seconde mesure comporte des informations sur la partie la plus basse du signal. Les deux mesures peuvent être combinées pour obtenir une mesure à grande dynamique.

La cohérence temporelle est simulée en encadrant la phase d'injection « A » par les deux phases d'injection « B1 » et « B2 ». On notera que cette technique fonctionnement de manière satisfaisante pour des flux incidents d'évolution progressive. Toutefois, un flux incident impulsionnel ne pourra être acquis simultanément par les phases « A » et « B1+B2 ». Pour un tel flux incident, la cohérence temporelle n'est pas réalisée.

Par ailleurs, le choix d'un condensateur de plus faible capacité pour les phases « B1 » et « B2 » est rendu possible en complément de la phase « A », ce qui permet de réduire le niveau de bruit global du signal obtenu. Toutefois, les échantillonnages successifs des phases « B1 » et « B2 » contribuent à l'augmentation du bruit de lecture.

En outre, il est indiqué dans le document susmentionné qu'un dispositif de lecture spécifique est utilisé. Afin de remplir toutes les fonctionnalités énoncées dans ce document, il est probable que ledit dispositif comporte un condensateur supplémentaire, ce qui est pénalisant dans la mesure où le dispositif de lecture est usuellement intégré dans une petite surface, par exemple dans un détecteur matriciel à petit pas.

Un autre exemple de dispositif de l'état de la technique est décrit dans l'article "Very wide dynamic range SWIR sensors for very low background applications" de Robert F. Cannata et al., SPIE Vol. 3698, Avril 1999. Ce dispositif utilise un amplificateur capacitif à transimpédance et permet d'opérer plusieurs lectures pendant une période d'intégration.

## EXPOSE DE L'INVENTION

Le but de la présente invention est de proposer un procédé et un dispositif de lecture des charges produites par un photodétecteur d'un détecteur matriciel permettant d'augmenter la dynamique de celui-ci sans dégrader le bruit de lecture.

A cet effet, l'invention a pour objet un procédé de lecture de charges électriques produites par un photodétecteur d'une matrice de photodétecteurs, tel que défini dans la revendication 1.

Selon l'invention, le transfert suivi de la lecture est réalisé en au moins deux phases, au moins une première phase ayant lieu pendant le recueil et le stockage des charges dans le premier élément capacitif, et une seconde phase ayant lieu à la fin du recueil et du stockage des charges électriques dans le premier élément capacitif.

En d'autres termes, on utilise la caractéristique selon laquelle la lecture de la tension aux bornes du second élément capacitif n'est pas destructrice, la quantité de charges stockées dans cet élément avant la lecture étant sensiblement égale à la quantité de charges stockées après la lecture. Il est ainsi possible de transférer, au cours même du stockage dans le premier élément capacitif, les charges déjà stockées dans celui-ci et lire la tension correspondante. Une fois la durée d'intégration terminée, les charges accumulées dans le premier élément capacitif depuis ce transfert sont également transférées vers le second élément capacitif et viennent s'ajouter aux charges déjà stockées. De fait, la charge totale en fin d'intégration est sensiblement égale à celle obtenue en fin de durée d'intégration par l'état de la technique mais, selon l'invention, on dispose d'au moins une mesure intermédiaire supplémentaire de tension.

Cette mesure intermédiaire obtenue avec un temps d'intégration plus court couvre une dynamique située au dessus de la dynamique correspondant à l'état de la technique. Elle complète ainsi la dynamique de l'état de la technique et la dynamique globale du détecteur est ainsi étendue.

De plus, la dynamique de haut niveau du détecteur est déduite de la mesure de la première phase et la dynamique de bas niveau est déduite de la mesure de la deuxième phase.

Par ailleurs, le bruit de mesure n'est pas augmenté par les mesures intermédiaires car les lectures sont non destructrices. Le bruit de chaque échantillonnage de lecture est ainsi annulé après chaque lecture par un rééquilibrage des charges lors de la phase suivante.

Selon une caractéristique avantageuse de l'invention, la ou chaque phase de transfert intervenant pendant le recueil et le stockage des charges dans le premier élément capacitif est réalisée simultanément pour tous les photodétecteurs de la matrice de photodétecteurs.

En outre, et avantageusement, le second élément capacitif est déchargé uniquement après la seconde phase de transfert.

L'invention a également pour objet un dispositif de lecture de charges électriques produites par un photodétecteur d'une matrice de photodétecteurs, tel que défini dans la revendication 4.

Selon l'invention, le circuit de pilotage est apte à fermer l'interrupteur lors d'au moins deux phases, au moins une première phase ayant lieu pendant l'activation du circuit d'injection, et une seconde phase ayant lieu à la fin de l'intégration, après que le circuit d'injection soit désactivé.

En d'autres termes, le dispositif met en oeuvre le procédé du type précité.

Avantageusement, le circuit de pilotage est apte à fermer les interrupteurs associés respectivement aux photodétecteurs de manière synchronisée.

En outre, et selon une autre caractéristique avantageuse, le circuit de pilotage est apte à décharger le second élément capacitif lorsque le circuit de lecture est désactivé.

L'invention a également pour objet un détecteur de rayonnement électromagnétique, comportant une pluralité de photodétecteurs aptes à créer des charges électriques ou moduler un courant électrique sous l'effet d'un rayonnement électromagnétique incident, le détecteur comportant, associé à chacun des photodétecteurs, un dispositif du type précité pour la lecture de charges produites par le photodétecteur.

## BREVE DESCRIPTION DES FIGURES

L'invention sera mieux comprise à la lecture de la description qui va suivre, donnée uniquement à titre d'exemple, et faite en relation avec les dessins annexés, dans lesquels des références identiques désignent des éléments identiques ou analogues, et dans lesquels :

- la figure 1 est une vue schématique d'un dispositif de lecture de l'état de la technique, décrit en relation avec le préambule ;
- la figure 2 est un tracé de chronogrammes de signaux de commande d'un circuit de pilotage du dispositif de la figure 1 illustrant un premier procédé de lecture de l'état de la technique, décrit en relation avec le préambule ;
- la figure 3 est un tracé simplifié de chronogrammes de signaux de commande d'un circuit de pilotage du dispositif de la figure 1, proposé en exemple pour réaliser une double intégration, illustrant un second procédé de lecture de l'état de la technique, décrit en relation avec le préambule ;
- la figure 4 est un tracé de chronogrammes de signaux de commande d'un circuit de pilotage du dispositif de la figure 1 illustrant un premier procédé de lecture selon l'invention ; et
- la figure 5 est un tracé de chronogrammes de signaux de commande d'un circuit de pilotage du dispositif de la figure 1 illustrant un second procédé de lecture selon l'invention.

## DESCRIPTION DETAILLEE DE L'INVENTION

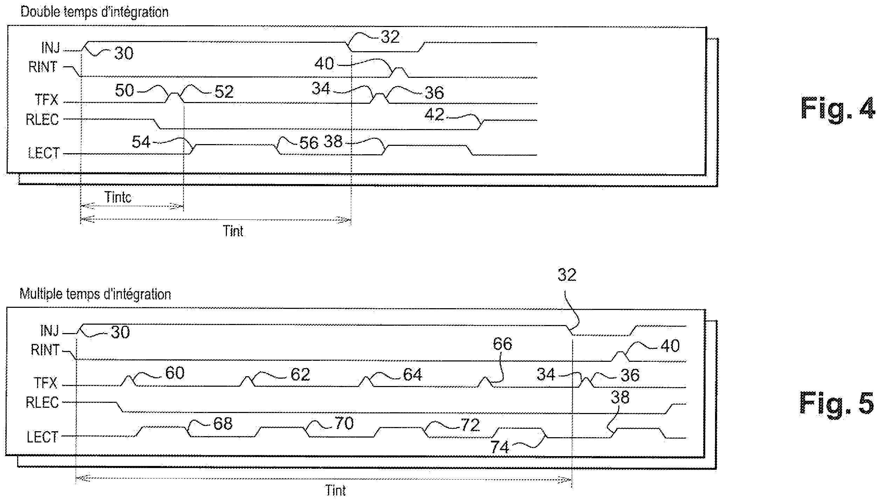

Sur la figure 4, des chronogrammes de signaux de commande du circuit de pilotage **24** illustrent un procédé de lecture selon l'invention des charges électriques produites par la photodiode **12** mis en oeuvre par le dispositif de lecture **10** décrit en relation avec la figure 1.

Ce procédé diffère essentiellement de celui décrit en relation avec la figure 2 en ce que le signal « TFX » est en outre basculé, en **50,** dans son état haut pendant la durée d'intégration Tint. Les charges déjà stockées dans le condensateur d'intégration **14** sont alors transférées, via l'interrupteur **20,** vers le condensateur de lecture **16.** Une fois ce transfert, quasi instantané, terminé, le signal « TFX » est basculé, en **52,** dans son état bas. Le signal de lecture « LECT » est alors basculé, en **54,** dans son état haut pour la lecture de la tension aux bornes du condensateur de lecture **16,** et pour le transfert de la tension lue vers l'extérieur du dispositif **10,** puis basculé, en **56,** dans son état bas avant le basculement du signal « INJ » dans son état bas en **32.**

Une fois le signal « INJ » basculé en **32** dans son état bas, l'ordonnancement des signaux est alors celui décrit en relation avec la figure 2.

Ainsi, une partie des charges produites par la photodiode **12,** accumulées dans le condensateur d'intégration **14** pendant une durée prédéterminée Tintc, est transférée vers le condensateur de lecture **16** pour lecture sans pour autant que ce dernier soit déchargé avant la lecture suivante. A la fin de la phase d'intégration, l'ensemble des charges produites par la photodiode **12** pendant la durée d'intégration Tint se répartit ainsi entre les condensateurs **14** et **16,** puis est finalement stocké dans le condensateur de lecture **16** à la fin du transfert **36** pour lecture. De fait, une mesure supplémentaire est réalisée, cette mesure étant temporellement cohérente avec la mesure réalisée à la fin de la durée d'intégration Tint. En outre, le positionnement du transfert de charges entre les condensateurs **14, 16** à l'intérieur de la durée d'intégration Tint permet de mesurer des flux plus importants sans dépasser la limites des charges stockables du circuit de lecture. La dynamique est ainsi étendue.

En outre, le circuit de pilotage **24** synchronise l'ensemble des transferts et des lectures de tension effectués pendant le durée d'intégration Tint pour les photodiodes du détecteur. Il est ainsi obtenu deux images temporellement cohérentes de la scène mais présentant des contrastes différents. On obtient notamment plus de détails dans les basses lumières et dans les hautes lumières.

La cohérence temporelle est définie par le fait qu'il existe un intervalle temporel pendant lequel les charges produites par la photodiode **12** se retrouvent dans toutes les images obtenues.

Bien qu'il ait été décrit un seul transfert et une seule lecture des charges produites par la photodiode pendant la durée d'intégration Tint, plusieurs mesures sont possibles, tel que cela est illustré à la figure 5, dans laquelle plusieurs transferts **60-64** suivis de lectures respectives **68-74** de la tension aux bornes du condensateur de lecture **16** sont réalisées pendant la durée d'intégration Tint.

De préférence, la capacité du condensateur de lecture **16** est sensiblement inférieure à la capacité du condensateur d'intégration **14** afin de maximiser la taille du condensateur d'intégration qui définit le nombre maximum de charge stockable dans le circuit de lecture. A titre d'exemple, la capacité du condensateur de lecture **16** est inférieure au tiers de la capacité du condensateur d'intégration **14.**

Grâce à l'invention, il est ainsi obtenu les avantages suivants :

- des mesures temporellement cohérentes d'une même scène ;
- des contrastes différents de la même scène ;
- une augmentation de la dynamique du détecteur ;
- une limitation du bruit de lecture ; et
- une mise en oeuvre simple, seule la logique du circuit de pilotage étant modifiée pour mettre en oeuvre l'invention.

## Revendications

1. Procédé de lecture de charges électriques produites par un photodétecteur (12) d'une matrice de photodétecteurs, comportant le recueil et le stockage (30) de charges électriques produites par le photodétecteur (12) pendant une durée d'intégration prédéterminée (Tint) dans un premier élément capacitif (14) distinct du photodétecteur (12), l'équilibrage (34, 50 ; 34, 60-66) des charges stockées dans le premier élément capacitif (14) vers un second élément capacitif (16) distinct du photodétecteur (12), et la lecture (38, 54 ; 38, 68-74) non destructrice de la tension aux bornes du second élément capacitif (16), dans lequel l'équilibrage (34, 50 ; 34, 60-66) suivi de la lecture (38, 54, 38, 68-74) est réalisé en au moins deux phases, comprenant chacune l'équilibrage des charges stockées dans le premier élément capacitif (14) vers le second élément capacitif (16) suivi d'une lecture de la tension aux bornes du second élément capacitif (16) :

   - au moins une première phase (50 ; 60-66) ayant lieu pendant le recueil et le stockage (30) des charges dans le premier élément capacitif (14),
   - et une seconde phase (34) ayant lieu à la fin de la durée d'intégration (Tint) après le recueil et le stockage (30) des charges électriques dans le premier élément capacitif (14).

2. Procédé de lecture de charges électriques selon la revendication 1, *caractérisé* **en ce que** la ou chaque phase d'équilibrage (50 ; 60-66) intervenant pendant le recueil et le stockage des charges dans le premier élément capacitif (14) est réalisée simultanément pour tous les photodétecteurs de la matrice de photodétecteurs.

3. Procédé de lecture de charges électriques selon l'une des revendications 1 et 2, *caractérisé en ce que* le second élément capacitif (16) est déchargé (40) uniquement après la seconde phase d'équilibrage (34).

4. Dispositif de lecture de charges électriques produites pendant une durée d'intégration prédéterminée (Tint) par un photodétecteur (12) d'une matrice de photodétecteurs, ledit dispositif comprenant :

■ un premier et un second éléments capacitifs (14, 16) distincts du photodétecteur (12),

■ un circuit d'injection (18), apte lorsqu'il est activé, à polariser le photodétecteur (12) et à transférer les charges produites par celui-ci vers le premier élément capacitif (14),

■ un interrupteur pilotable (20), apte dans son état fermé, à équilibrer les charges stockées dans le premier élément capacitif (14) vers le second élément capacitif (16),

■ un circuit de lecture (22) non destructrice apte à lire la tension aux bornes du second élément capacitif (16),

■ et un circuit de pilotage (24) apte à piloter l'interrupteur (20) pour l'équilibrage des charges du premier élément capacitif (14) vers le second élément capacitif (16),

dans lequel le circuit de pilotage (24) est apte à fermer l'interrupteur (20), puis commander la lecture de la tension aux bornes du second élément capacitif (16), lors d'au moins deux phases (34, 50 ; 34, 60-66), au moins une première phase (50 ; 60-66) ayant lieu pendant l'activation du circuit d'injection (18), et une seconde phase (34) ayant lieu à la fin de la durée d'intégration (Tint), après que le circuit d'injection (18) soit désactivé.

5. Dispositif de lecture de charges électriques selon la revendication 4, *caractérisé en ce que* le circuit de pilotage (24) est apte à fermer les interrupteurs (20) associés respectivement aux photodétecteurs de manière synchronisée.

6. Dispositif de lecture de charges électriques selon l'une des revendications 4 et 5, *caractérisé en ce que* le circuit de pilotage (24) est en outre apte à décharger le second élément capacitif (16) lorsque le circuit de lecture (22) est désactivé.

7. Détecteur de rayonnement électromagnétique comportant une pluralité de photodétecteurs aptes à créer des charges électriques ou moduler un courant sous l'effet d'un rayonnement électromagnétique incident, le détecteur comportant, associé à chacun des photodétecteurs, un dispositif conforme à l'une quelconque des revendications 4 à 6 pour la lecture de charges produites par le photodétecteur.

**Patentansprüche**

1. Ein Verfahren zum Lesen von elektrischen Ladungen, die durch einen Photodetektor (12) einer Photodetektormatrix erzeugt wurden, welches das Sammeln und Speichern (30) von durch den Photodetektor (12) erzeugten elektrischen Ladungen während einer vorher festgelegten Integrationszeit (Tint) in einem ersten kapazitiven Element (14), das sich vom Photodetektor (12) unterscheidet, umfasst, die Ausgleichsübertragung (34, 50 ; 34, 60-66) der im ersten kapazitiven Element (14) gespeicherten Ladungen zu einem zweiten kapazitiven Element (16), das sich vom Photodetektor (12) unterscheidet und das zerstörungsfreie Lesen (38, 54 ; 38, 68-74) der Spannung an den Anschlüssen des zweiten kapazitiven Elements (16), bei dem die Ausgleichsübertragung (34, 50; 34, 60-66), gefolgt vom Lesen (38, 54; 38, 68-74), in mindestens zwei Phasen erfolgt, die jeweils die Ausgleichsübertragung der im ersten kapazitiven Element (14) gespeicherten Ladungen zum zweiten kapazitiven Element (16), gefolgt vom Lesen der Spannung an den Anschlüssen des zweiten kapazitiven Elements (16), umfasst:

■ mindestens eine erste Phase (50; 60-66) findet während des Sammelns und Speicherns der Ladungen statt, und eine zweite Phase findet am Ende des Sammelns und Speicherns im ersten kapazitiven Element (14) statt,

■ und eine zweite Phase (34) findet am Ende der Integrationszeit (Tint), nach dem Sammeln und Speichern (30) der elektrischen Ladungen im ersten kapazitiven Element (14) statt.

2. Verfahren zum Lesen von elektrischen Ladungen gemäß Anspruch 1, *dadurch gekennzeichnet, dass* die Ausgleichsübertragungsphase oder -phasen (50; 60-66), die während des Sammelns und Speicherns der Ladungen im ersten kapazitiven Element (14) stattfinden, gleichzeitig für alle Photodetektoren der Photodetektormatrix stattfindet oder stattfinden.

3. Verfahren zum Lesen von elektrischen Ladungen gemäß einem der Ansprüche 1 und 2 *dadurch gekennzeichnet, dass* das zweite kapazitive Element (16) nur nach der zweiten Ausgleichsübertragungsphase (34) entladen wird (40).

**4.** Vorrichtung zum Lesen von elektrischen Ladungen, die während einer vorher festgelegten Integrationszeit (Tint) durch einen Photodetektor (12) einer Photodetektormatrix erzeugt werden, wobei diese Vorrichtung umfasst:

> ■ ein erstes und ein zweites kapazitives Element (14, 16), die sich vom Photodetektor (12) unterscheiden,
> ■ einen Einspeisungskreis (18), der, wenn er aktiviert ist, in der Lage ist, den Photodetektor (12) zu polarisieren und die von diesem erzeugten Ladungen an das erste kapazitive Element (14) zu übertragen,
> ■ einen steuerbaren Schalter (20), der im geschlossenen Zustand in der Lage ist, die im ersten kapazitiven Element (14) gespeicherten Ladungen an das zweite kapazitive Element (16) zu übertragen,
> ■ ein zerstörungsfreier Leseschaltkreis (22), der in der Lage ist, die Spannung an den Anschlüssen des zweiten kapazitiven Elements (16) zu lesen
> ■ und einen Steuerschaltkreis (24), der in der Lage ist den Schalter (20) zur Ausgleichsübertragung der Ladungen des ersten kapazitiven Elementes (14) an das zweite kapazitive Element (16) zu steuern, bei dem der Steuerschaltkreis (24) in der Lage ist, den Schalter (20) zu schließen und dann das Lesen der Spannung an den Anschlüssen des zweiten kapazitiven Elements (16) zu steuern, während mindestens zwei Phasen (34, 50; 34, 60-66), wobei mindestens eine erste Phase (50; 60-66) während der Aktivierung des Einspeisungskreises (18) erfolgt und eine zweite Phase (34) am Ende der Integrationszeit (Tint) stattfindet, nachdem der Einspeisungskreis (18) deaktiviert wurde.

**5.** Vorrichtung zum Lesen von elektrischen Ladungen gemäß Anspruch 4, **dadurch *gekennzeichnet, dass*** der Steuerschaltkreis (24) in der Lage ist, jeweils die mit den Photodetektoren verbundenen Schalter (20) synchronisiert zu schließen.

**6.** Vorrichtung zum Lesen von elektrischen Ladungen gemäß einem der Ansprüche 4 und 5 **dadurch gekennzeichnet, dass** der Steuerschaltkreis (24) außerdem in der Lage ist, das zweite kapazitive Element (16) zu entladen, wenn der Leseschaltkreis (22) deaktiviert ist.

**7.** Elektromagnetischer Strahlungsdetektor, mit einer Vielzahl von Photodetektoren, die in der Lage sind, elektrische Ladungen zu erzeugen oder einen Strom unter der Wirkung einer einfallenden elektromagnetischen Strahlung zu modulieren, wobei der Detektor, eine Vorrichtung, gemäß irgendeinem der Ansprüche 4 bis 6, verbunden mit jedem der Photodetektoren zum Lesen der vom Photodetektor erzeugten Ladungen enthält.

**Claims**

**1.** Method for reading electrical charges produced by a photo-detector (12) of a photo-detector matrix, comprising collecting and storing (30) electrical charges produced by the photo-detector (12) during a predetermined integration period Tint in a first capacitive element (14) distinct from the photo-detector (12), balancing (34, 50; 34, 60-66) the charges stored in the first capacitive element (14) to a second capacitive element (16) distinct from the photo-detector (12), and non-destructive reading (38, 54; 38, 68-74) the voltage at the terminals of the second capacitive element (16), method in which balancing (34, 50; 34, 60-66) followed by reading (38, 54, 38, 68-74) is carried out in at least two phases, each comprising balancing the charges stored in the first capacitive element (14) to the second capacitive element (16) followed by reading the voltage at the terminals of the second capacitive element (16) ;

> ■ at least one first phase (50; 60-66) taking place during the collection and storage (30) of the charges in the first capacitive element (14),
> ■ and a second phase (34) taking place at the end of the integration period Tint after the collection and storage (30) of the electrical charges in the first capacitive element (14).

**2.** Method for reading electrical charges as claimed in claim 1, ***characterized* in that** the or each balancing phase (50; 60-66) occurring during the collection and storage of the charges in the first capacitive element (14) is conducted simultaneously for all the photo-detectors in the photo-detector matrix.

**3.** Method for reading electrical charges as claimed in one of claims 1 and 2, ***characterized* in that** the second capacitive element (16) is discharged (40) only after the second balancing phase (34).

**4.** Device for reading electrical charges produced during a predetermined integration period Tint by a photo-detector (12) of a photo-detector matrix, said device comprising:

> ■ a first and a second capacitive elements (14, 16) distinct from the photo-detector (12),
> ■ an injection circuit (18), capable, when it is enabled, of biasing the photo-detector (12) and of transferring the charges produced thereby to the first capacitive element (14),
> ■ a controllable switch (20), capable in its closed state, of balancing the charges stored in the first capacitive element (14) to the second capacitive element (16),

■ a non-destructive read circuit (22) capable of reading the voltage at the terminals of the second capacitive element (16),

■ and a control circuit (24) capable of controlling the switch (20) in order to balance the charges from the first capacitive element (14) to the second capacitive element (16),

in which the control circuit (24) is capable of closing the switch (20), and then controlling the reading of the voltage at the terminals of the second capacitive element (16), during the course of at least two phases (34, 50; 34, 60-66), at least one first phase (50; 60-66) taking place while the injection circuit (18) is enabled, and a second phase (34) taking place at the end of the integration period (Tint), after the injection circuit (18) is disabled.

5. Device for reading electrical charges as claimed in claim 4, **characterized** **in that** the control circuit (24) is capable of closing the switches (20) respectively associated with the photo-detectors in a synchronized way.

6. Device for reading electrical charges as claimed in one of claims 4 and 5, **characterized** **in that** the control circuit (24) is further capable of discharging the second capacitive element (16) when the read circuit (22) is disabled.

7. Detector of electromagnetic radiation comprising a plurality of photo-detectors capable of creating electrical charges or modulating a current under the effect of an incident electromagnetic radiation, the detector comprising, associated with each of the photo-detectors, a device as claimed in any one of the claims 4 to 6 for reading charges produced by the photo-detector.

Fig. 1
(Etat de la technique)

Fig. 2
(Etat de la technique)

Fig. 3
(Etat de la technique)

**Fig. 4**

Double temps d'intégration

INJ 30
RINT

TFX 50 52
RLEC 54

LECT 56 38

32
40
34
36
42

Tint
Tintc

**Fig. 5**

Multiple temps d'intégration

INJ 30
RINT

TFX 60 62 64 66
RLEC 68 70 72 74

LECT

32
34 36 38
40

Tint

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **O. NESHER.** Performance of BF focal plane array 320x256 InSb detector. *Semi Conductor Devices, proc. of SPIE,* vol. 4820, 699

- **ROBERT F. CANNATA et al.** Very wide dynamic range SWIR sensors for very low background applications. *SPIE,* Avril 1999, vol. 3698